# EUROPÄISCHE PATENTSCHRIFT

(11) **EP 1 973 772 B1**
(45) Veröffentlichungstag und Bekanntmachung des Hinweises auf die Patenterteilung: **18.05.2011**
(21) Anmeldenummer: 07702621.9
(22) Anmeldetag: 09.01.2007
(51) Int. Cl.: B62D 25/20, B62D 29/02

(54) **FAHRZEUG-UNTERBODENTEIL, INSBESONDERE UNTERBODENVERKLEIDUNG ODER RADHAUSVERKLEIDUNG**
VEHICLE UNDERBODY PART, ESPECIALLY UNDERBODY PANEL OR WHEEL ARCH PANEL
ÉLÉMENT DE DESSOUS DE CAISSE DE VÉHICULE NOTAMMENT HABILLAGE DE DESSOUS DE CAISSE OU HABILLAGE DE PASSAGE DE ROUE

(30) Priorität: 20.01.2006 DE 102006002769
(43) Veröffentlichungstag der Anmeldung: 01.10.2008
(73) Patentinhaber: Röchling Automotive AG & Co. KG, 68165 Mannheim (DE)
(72) Erfinder: ORTH, Arno, 67580 Hamm (DE)
(74) Vertreter: Trossin, Hans-Jürgen
(86) Internationale Anmeldenummer: PCT/EP2007/000105
(87) Internationale Veröffentlichungsnummer: WO 2007/087955

(56) Entgegenhaltungen:
- FR-A1- 2 864 512
- US-A1- 3 826 327

## Beschreibung

Die Erfindung betrifft ein Fahrzeug-Unterbodenteil, insbesondere eine Unterbodenverkleidung oder eine Radhausverkleidung, gemäß dem Oberbegriff des Anspruchs 1.

Ein Fahrzeug und insbesondere ein Kraftfahrzeug trägt auf seiner dem Erdboden zugewandten Unterseite mehrere Unterbodenteile, die einerseits dem Schutz der Unterseite des Fahrzeugs vor Steinschlag oder sonstigen mechanischen Beanspruchungen und andererseits der Dämpfung der Fahrgeräusche dienen. Bei einem entsprechenden Unterbodenteil kann es sich entweder um eine sogenannte Unterbodenverkleidung oder auch um eine Radhausverkleidung handeln, wobei im Folgenden beispielhaft von einer Unterbodenverkleidung ausgegangen werden soll.

Um die Unterseite des Fahrzeugs möglichst vollständig zu schützen und um die Fahrgeräusche weitestgehend zu dämpfen, sollte die Unterbodenverkleidung die Unterseite des Fahrzeugs vollständig abkapseln. Zu Reparatur- und/oder Wartungszwecken ist es jedoch notwendig, an der Unterseite des Fahrzeugs Arbeiten auszuführen, die durch die Unterboden-verkleidung verhindert werden. Um zu vermeiden, das bei einfachen Arbeiten, beispielsweise dem Ablassen von Motoröl, die gesamte Unterbodenverkleidung des Fahrzeugs abgebaut werden muss, ist es bekannt, in der Unterbodenverkleidung mehrere Öffnungen, sogenannte Revisionsöffnungen, auszubilden, die bei dem normalen Fahrbetrieb des Fahrzeugs mittels eines Deckels verschlossen sind.

Eine Unterbodenverkleidung der genannten Art ist üblicherweise als Kunststoff-Spritzgußteil ausgebildet, so dass die Öffnungen in einfacher Weise bereits bei der Herstellung der Unterbodenverkleidung vorgesehen werden können. Die Deckel werden als separates Kunststoff-Spritzgußteil hergestellt und nachträglich an der Unterbodenverkleidung so montiert und insbesondere festgeschraubt, dass die Öffnungen verschlossen sind. Dieses Vorgehen ist einerseits herstellungstechnisch aufwendig, da separate Bauteile in eigenen Spritzgußwerkzeugen hergestellt werden müssen. Darüber hinaus benötigt sowohl die Montage des Deckels an der Unterbodenverkleidung als auch das Abnehmen des Deckels für Reparatur- bzw. Wartungsarbeiten relativ viel Zeit, was unerwünscht ist.

Ein gattungsgemäßes Fahrzeng-Unterbodenteil ist aus der FR2864512A bekannt.

Der Erfindung liegt die Aufgabe zugrunde, ein Fahrzeug-Unterbodenteil der genannten Art zu schaffen, das in einfacher Weise herstellbar ist und ein schnelles Öffnen und Verschließen der Öffnung mittels des Deckels ermöglicht.

Diese Aufgabe wird mit einem Fahrzeug-Unterbodenteil mit den kennzeichnenden Merkmalen des Anspruchs 1 gelöst. Dabei ist vorgesehen, dass der Deckel über ein Gelenkteil mit dem Fahrzeug-Unterbodenteil verbunden ist und dass das Fahrzeug-Unterbodenteil, das Gelenkteil und der Deckel von einem einstückigen Kunststoff-Spritzgußteil gebildet sind.

Erfindungsgemäß wird von der Grundüberlegung ausgegangen, das Fahrzeug-Unterbodenteil und den Deckel in einem gemeinsamen Spritzgußwerkzeug herzustellen, wobei der Deckel über das Gelenkteil gelenkig bzw. schwenkbar am Fahrzeug-Unterbodenteil angeschlossen ist. Auf diese Weise kann das Fahrzeug-Unterbodenteil zusammen mit dem Deckel hergestellt werden, wodurch die Herstellung vereinfacht ist. Darüber hinaus ist der Vorteil gegeben, dass der Deckel sowohl in seinem geschlossenen Zustand als auch in seinem offenen Zustand fest mit dem Fahrzeug-Unterbodenteil verbunden ist und somit nicht verloren gehen kann.

Vorzugsweise bestehen das Fahrzeug-Unterbodenteil, das Gelenkteil und der Deckel aus einem einheitlichen Kunststoffmaterial, es ist jedoch auch möglich, diese Teile in einem Zwei- oder Drei-Komponenten-Spritzgußverfahren herzustellen, wobei diese Verfahren an sich bekannt sind.

In Weiterbildung der Erfindung ist vorgesehen, dass der Deckel in seiner geschlossenen Position formschlüssig an dem Fahrzeug-Unterbodenteil gehalten ist. Dies kann insbesondere dadurch erreicht werden, dass der Deckel mit dem Fahrzeug-Unterbodenteil verrastbar ist. Auf diese Weise ist der Vorteil gegeben, dass zusätzliche Befestigungselemente, z.B. Schrauben, nicht notwendig sind, so dass sich der Dekkel in besonders einfacher und schneller Weise sowohl öffnen als auch schließen lässt.

In bevorzugter Ausgestaltung der Erfindung ist vörgesehen, dass die Öffnung trapezförmig ist und dass das Gelenkteil an einer Grundkante der trapezförmigen Öffnung mit dem Fahrzeug-Unterbodenteil verbunden ist. Die Öffnung besitzt vorzugsweise die Form eines gleichschenkligen Trapezes mit einer unteren langen Grundkante und einer im Abstand dazu parallel verlaufenden, kurzen Frontkante sowie schrägen Seitenkanten. Das Gelenkteil, das vorzugsweise plattenförmig ausgebildet ist, ist mit einer Seitenkante an der langen Grundkante der trapezförmigen Öffnung unter Bildung eines Scharniergelenks angeformt und erstreckt sich vorzugsweise über die gesamte Länge der Grundkante der trapezförmigen Öffnung.

In bevorzugter Ausgestaltung der Erfindung ist vorgesehen, dass das Gelenkteil die Form einer rechteckigen Platte besitzt, die an ihrer einen Seitenkante mit der Grundkante der Öffnung und an ihrer entgegengesetzten Seitenkante mit einer Grundkante des Deckels verbunden ist. Sowohl zwischen dem Fahrzeug-Unterbodenteil und dem Gelenkteil als auch zwischen dem Gelenkteil und dem Deckel ist jeweils ein Scharniergelenk gebildet, wobei die beiden Scharniergelenke parallel zueinander verlaufen.

Der Deckel ist vorzugsweise deckungsgleich der Öffnung, wodurch eine einfache Herstellung im Spritzgußwerkzeug möglich ist.

Wenn der Deckel und die Öffnung deckungsgleich sind, kann durch Einsetzen des Deckels in die Öffnung keine vollständige Überdeckung der Öffnung erreicht werden, da immer zwischen dem Deckel und dem Rand der Öffnung ein geringer Spalt verbliebe. In Weiterbildung der Erfindung ist deshalb vorgesehen, dass das Gelenkteil in geschlossenem Zustand des Deckels einen nahe der Grundkante liegenden Abschnitt der Öffnung überdeckt. Wenn das Gelenkteil rechteckig ist und sich über die gesamte Länge der Grundkante der Öffnung erstreckt, kann es durch Umklappen um das zwischen dem Gelenkteil und der Grundkante der Öffnung gebildete Scharniergelenk so auf die Oberseite der Öffnung aufgelegt werden, dass es den nahe der Grundkante liegenden Abschnitt der Öffnung vollständig überdeckt und mit den Endbereichen seiner gegenüberliegenden, mit dem Deckel verbundenen Seitenkante auf dem Rand der Öffnung aufliegt. Dadurch erhält der Deckel einen Versatz um das Maß der Höhe des Gelenkteils, d.h. dem Abstand zwischen den beiden Scharniergelenken. Durch diesen Versatz wird der Deckel in Richtung der kürzeren Frontkante der Öffnung verschoben, so dass der Deckel vollständig auf dem Rand der Öffnung aufliegt und die Öffnung im Zusammenwirken mit dem Gelenkteil vollständig abdeckt.

Der Versatz des Deckels in seiner geschlossenen Stellung gegenüber der Öffnung kann in Weiterbildung der Erfindung dazu genutzt werden, den Deckel mit dem Fahrzeug-Unterbodenteil zu verrasten. Zu diesem Zweck kann vorgesehen sein, dass am Fahrzeug-Unterbodenteil nahe der der Grundkante gegenüberliegenden Frontkante der Öffnung eine Rastvorrichtung ausgebildet ist. Die Rastvorrichtung umfasst vorzugsweise einen aus dem Fahrzeug-Unterbodenteil aufsteigenden und zumindest abschnittsweise im Abstand oberhalb von diesem parallel dazu verlaufenden Haltefinger, so dass der Deckel mit seiner Frontkante unter den Haltefinger bzw. zwischen den Haltefinger und die Oberseite des Fahrzeug-Unterbodenteils eingeschoben werden kann. Am Haltefingers und am Deckel sind entsprechende Rastelemente vorgesehen, die in diesem Zustand in Eingriff treten.

Gegebenenfalls kann vorgesehen sein, das der Deckel und/oder das Gelenkteil nahe der Grundkante der Öffnung zusätzlich mit dem Fahrzeug-Unterbodenteil verrastet ist.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: eine Aufsicht auf ein Fahrzeug-Unterboden- teil mit einer Öffnung, wobei der Deckel weggelassen wurde,
- Fig. 2: eine perspektivische Darstellung der Öffnung im Fahrzeug-Unterbodenteil mit geöffnetem Deckel und
- Fig. 3: eine Figur 1 entsprechende Darstellung mit geschlossenem Deckel.

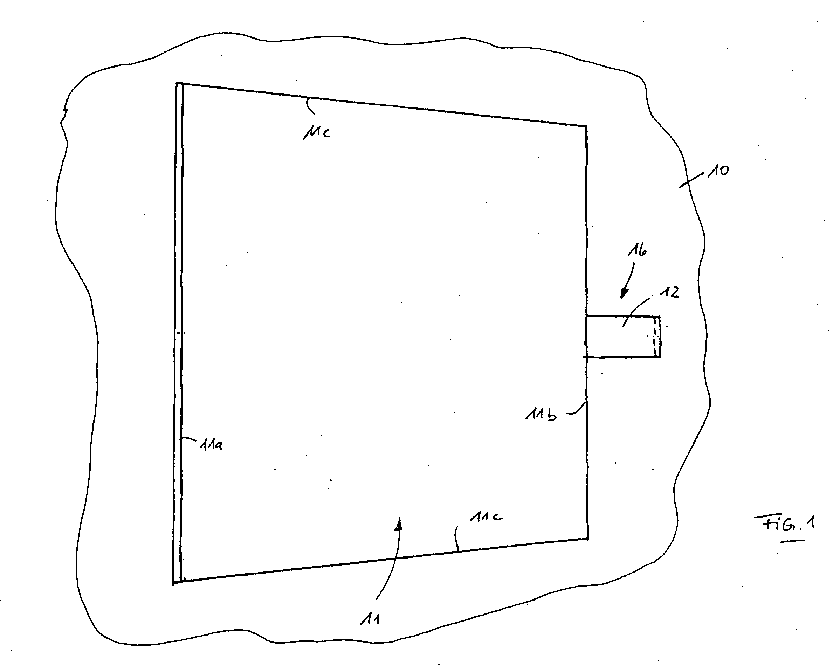

Die Figuren 1, 2 und 3 zeigen einen Ausschnitt aus einem nicht näher bezeichneten Fahrzeug-Unterbodenteil 10, bei dem es sich vorzugsweise um eine Unterbodenverkleidung handelt. In dem Fahrzeug-Unterbodenteil 10 ist eine trapezförmige Öffnung 11 ausgebildet, die eine lange Grundkante 11a, eine entgegengesetzte, dazu parallele kurze Frontkante 11b und schräg verlaufende Seitenkanten 11c besitzt. Wie Figur 1 zeigt, besitzt die Öffnung 11 die Form eines gleichschenkeligen Trapezes.

Nahe der kurzen Frontkante 11b der Öffnung 11 ist im Fahrzeug-Unterbodenteil 10 eine Rastvorrichtung 16 ausgebildet, die einen Haltefinger 12 aufweist, der in Abstand von der Öffnung 11 aus dem Fahrzeug-Unterbodenteil 10 aufsteigt und sich in seinem vorderen freien Abschnitt im wesentlichen parallel zur Oberseite des Fahrzeug-Unterbodenteils 10 in Richtung der Öffnung 11 erstreckt. Auf diese Weise ist zwischen der Oberseite des Fahrzeug-Unterbodenteils 10 und dem Haltefinger 12 ein Zwischenraum 13 gebildet, der in Richtung der Fröntkante 11b der Öffnung 11 öffnet. Der Haltefinger 12 weist auf seiner inneren, dem Zwischenraum 13 zugewandten Oberfläche eine Rastnut 12a auf.

An der längeren Grundkante 11a der Öffnung 11 ist ein Gelenkteil 14 in Form einer rechteckigen langgestreckten, schmalen Platte angeformt. Das plattenförmige Gelenkteil 14 erstreckt sich über die gesamte Länge der Grundkante 11a der Öffnung 11, wobei zwischen der Grundkante 11a und der zugeordneten Seitenkante 14a des plattenförmigen Gelenkteils 14 ein erstes Scharniergelenk gebildet ist.

An seiner dem ersten Scharniergelenk entgegengesetzten Seitenkante 14b ist das plattenförmige Gelenkteil 14 unter Bildung eines zweiten Scharniergelenks mit der Grundkante 15a eines ebenfalls trapezförmigen Deckels 15 einstückig verbunden, wobei der Deckel 15 und die Öffnung 11 deckungsgleich sind, d.h. der Deckel 15 in seinen Abmessungen und seiner Form genau der Öffnung 11 entspricht. An einer der Grundkante 15a des Deckels 15 gegenüberliegenden Frontkante 15b ist auf der Oberseite des Deckels 15 eine Rastleiste 17 angeformt, die mit der Rastnut 12a des Haltefingers 12 in Eingriff treten kann.

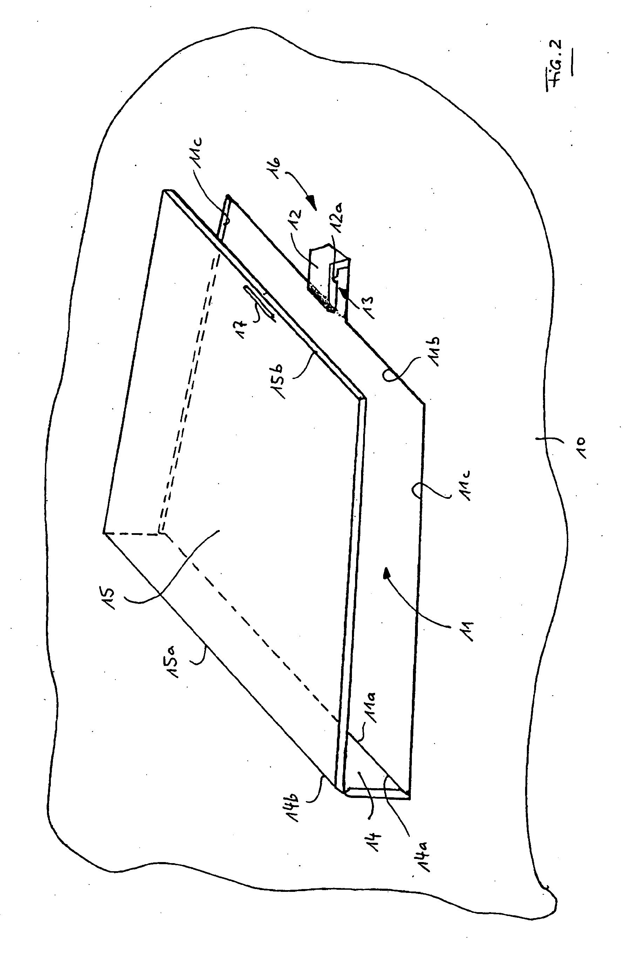

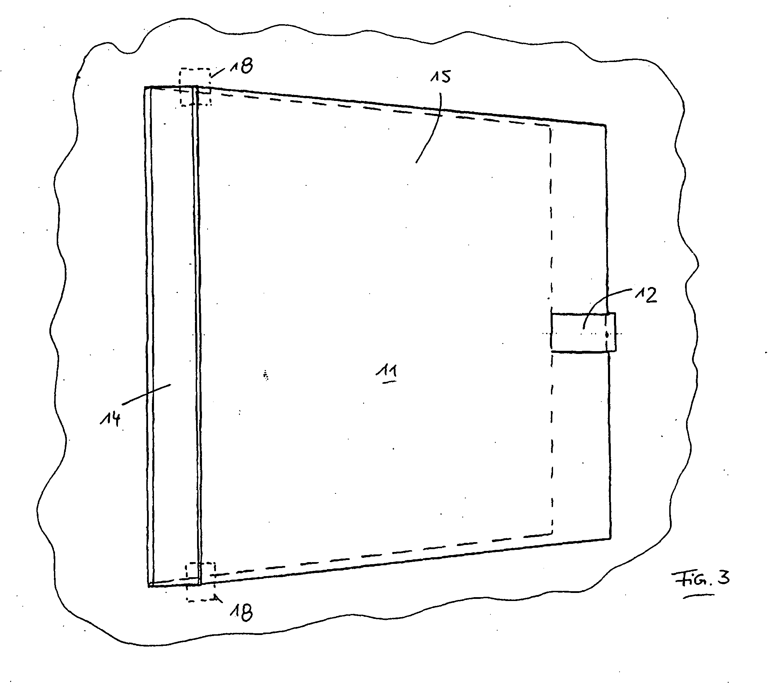

Figur 2 zeigt den Deckel 15 in seiner Offenstellung. Um den Deckel 15 in die Schließstellung zu bringen, wird die Frontkante 15b des Deckels 15 in den Zwischenraum 13 zwischen der Oberseite des Fahrzeug-Unterbodenteils 10 und dem Haltefinger 12 eingeführt, bis die Rastleiste 17 mit der Rastnut 12a des Haltefingers 12 in Eingriff tritt. Bei diesem Einführvorgang schwenkt das plattenförmige Gelenkteil 14 um seine beiden Scharniergelenke und legt sich nahe der Grundkante 11a der Öffnung 11 auf diese auf. Da das plattenförmige Gelenkteil 14 rechteckig, die Öffnung 11 jedoch trapezförmig ist, kann das Gelenkteil 14 sich am Rand der Öffnung 11 abstützen, wie es in Figur 3 gezeigt ist.

Durch das Umlegen des plattenförmigen Gelenkteils 14 erfährt der Deckel 15 eine Verlagerung in Richtung der schmalen Frontkante 11b der Öffnung 11. Dadurch ist einerseits gewährleistet, dass der Deckel 15 in den Zwischenraum 13 eindringen kann, andererseits legt sich der Deckel 15 auf den Rand der Öffnung 11 auf und deckt diese somit vollständig ab.

Gegebenenfalls kann vorgesehen sein, dass der Deckel 15 und/oder das plattenförmige Gelenkteil 14 an den Seitenkanten 11c der Öffnung 11 nahe deren Grundkante 11a über zusätzlich Rastelemente 18, die in Figur 3 gestrichelt dargestellt sind, gehalten ist.

## Patentansprüche

1. Fahrzeug-Unterbodenteil (10), insbesondere Unterbodenverkleidung oder Radhausverkleidung, in Form eines Kunststoff-Spritzgußteils, mit zumindest einer Öffnung (11), die mittels eines zu öffnenden Deckels (15) verschließbar ist, wobei der Deckel (15) über ein Gelenkteil (14) mit dem Fahrzeug-Unter-bodenteil (10) verbunden ist, **dadurch gekennzeichnet, dass** das Fahrzeug-Unterbodenteil (10), das Gelenkteil (14) und der Deckel (15) von einem einstückigen Kunststoff-Spritzgußteil gebildet sind.

2. Fahrzeug-Unterbodenteil nach Anspruch 1, **dadurch gekennzeichnet, dass** der Deckel (15) in seiner geschlossenen Position formschlüssig an dem Fahrzeug-Unterbodenteil (10) gehalten ist.

3. Fahrzeug-Unterbodenteil nach Anspruch 2, **dadurch gekennzeichnet, dass** der Deckel (15) mit dem Fahrzeug-Unterbodenteil (10) verrastbar ist.

4. Fahrzeug-Unterbodenteil nach einem der Ansprüche 1 bis 3, **dadurch gekennzeichnet, dass** die Öffnung (11) trapezförmig ist und dass das Gelenkteil (14) an einer Grundkante (11a) der trapezförmigen Öffnung (11) mit dem Fahrzeug-Unterbodenteil (10) verbunden ist.

5. Fahrzeug-Unterbodenteil nach Anspruch 4, **dadurch gekennzeichnet, dass** das Gelenkteil (14) sich über die gesamte Länge der Grundkante (11a) der trapezförmigen Öffnung (11) erstreckt.

6. Fahrzeug-Unterbodenteil nach einem der Ansprüche 1 bis 5, **dadurch gekennzeichnet, dass** das Gelenkteil (14) die Form einer rechteckigen Platte besitzt, die an ihrer einen Seitenkante (14a) mit der Grundkante (11a) der Öffnung (11) und mit ihrer entgegengesetzten Seitenkante (14b) mit einer Grundkante (15a) des Deckels (15) verbunden ist.

7. Fahrzeug-Unterbodenteil nach einem der Ansprüche 1 bis 6, **dadurch gekennzeichnet, dass** der Deckel (15) dekkungsgleich der Öffnung (11) ist.

8. Fahrzeug-Unterbodenteil nach einem der Ansprüche 1 bis 7, **dadurch gekennzeichnet, dass** am Fahrzeug-Unterbodenteil (10) nahe der der Grundkante (11a) gegenüberliegenden Frontkante (11b) der Öffnung (11) eine Rastvorrichtung (16) ausgebildet ist.

9. Fahrzeug-Unterbodenteil nach einem der Ansprüche 4 bis 8, **dadurch gekennzeichnet, dass** das Gelenkteil (14) im geschlossenen Zustand des Deckels (15) einen nahe der Grundkante (11a) liegenden Abschnitt der Öffnung (11) überdeckt.

## Claims

1. A vehicle underbody part (10), in particular underbody panelling or wheel arch panelling, in the form of an injection-moulded plastics part, with at least one opening (11) which can be closed by means of a cover (15) which is to be opened, wherein the cover (15) is connected to the vehicle underbody part (10) via a hinge part (14), **characterised in that** the vehicle underbody part (10), the hinge part and cover (15) are formed by a one-piece injection-moulded plastics part.

2. A vehicle underbody part according to Claim 1,
**characterised in that**, in its closed position, the cover (15) is retained in a form-locking manner on the vehicle underbody part (10).

3. A vehicle underbody part according to Claim 2,
**characterised in that** the cover (15) can be engaged with the vehicle underbody part (10).

4. A vehicle underbody part according to any one of Claims 1 to 3, **characterised in that** the opening (11) is trapezium-shaped, and **in that** the hinge part (14) is connected to the vehicle underbody part (10) at a base edge (11a) of the trapezium-shaped opening (11).

5. A vehicle underbody part according to Claim 4, **characterised in that** the hinge part (14) extends over the entire length of the base edge (11a) of the trapezium-shaped opening (11).

6. A vehicle underbody part according to any one of Claims 1 to 5, **characterised in that** the hinge part (14) has the shape of a rectangular plate which, on one side edge (14a) thereof, is connected to the base edge (11a) of the opening (11) and, with its opposite side edge (14b), is connected to the a base edge (15a) of the cover (15).

7. A vehicle underbody part according to any one of Claims 1 to 6, **characterised in that** the cover (15) is congruent with the opening (11).

8. A vehicle underbody part according to any one of Claims 1 to 7, **characterised in that** a latch device (16) is formed on the vehicle underbody part (10) near the front edge (11b) of the opening (11) opposite the base edge (11a).

9. A vehicle underbody part according to any one of Claims 4 to 8, **characterised in that**, in the closed condition of the cover (15), the hinge part (14) overlaps a portion of the opening (11) situated near the base edge (11a).

## Revendications

1. Elément de dessous de caisse de véhicule (10), notamment habillage de dessous de caisse ou habillage de passage de roue, sous la forme d'une pièce moulée par injection de plastique, comprenant au moins une ouverture (11) qui peut être fermée au moyen d'un couvercle (15) ouvrant, le couvercle (15) étant relié à l'élément de dessous de caisse de véhicule (10) par le biais d'un élément d'articulation (14), **caractérisé en ce que** l'élément de dessous de caisse de véhicule (10), l'élément d'articulation (14) et le couvercle (15) sont formés d'une pièce moulée par injection de plastique d'un seul tenant.

2. Elément de dessous de caisse de véhicule selon la revendication 1, **caractérisé en ce que** le couvercle (15) est maintenu dans sa position fermée par complémentarité de forme au niveau de l'élément de dessous de caisse de véhicule (10).

3. Elément de dessous de caisse de véhicule selon la revendication 2, **caractérisé en ce que** le couvercle (15) peut s'enclencher avec l'élément de dessous de caisse de véhicule (10).

4. Elément de dessous de caisse de véhicule selon l'une quelconque des revendications 1 à 3, **caractérisé en ce que** l'ouverture (11) est trapézoïdale et **en ce que** l'élément d'articulation (14) est relié au niveau d'une arête de base (11a) de l'ouverture trapézoïdale (11) à l'élément de dessous de caisse de véhicule (10).

5. Elément de dessous de caisse de véhicule selon la revendication 4, **caractérisé en ce que** l'élément d'articulation (14) s'étend sur toute la longueur de l'arête de base (11a) de l'ouverture trapézoïdale (11).

6. Elément de dessous de caisse de véhicule selon l'une quelconque des revendications 1 à 5, **caractérisé en ce que** l'élément d'articulation (14) a la forme d'une plaque rectangulaire qui est reliée au niveau d'une de ses arêtes latérales (14a) à l'arête de base (11a) de l'ouverture (11) et avec son arête latérale opposée (14b) à une arête de base (15a) du couvercle (15).

7. Elément de dessous de caisse de véhicule selon l'une quelconque des revendications 1 à 6, **caractérisé en ce que** le couvercle (15) coïncide avec l'ouverture (11).

8. Elément de dessous de caisse de véhicule selon l'une quelconque des revendications 1 à 7, **caractérisé en ce qu'**un dispositif d'arrêt (16) est réalisé sur l'élément de dessous de caisse de véhicule (10) à proximité de l'arête frontale (11 b) de l'ouverture (11) faisant face à l'arête de base (11a).

9. Elément de dessous de caisse de véhicule selon l'une quelconque des revendications 4 à 8, **caractérisé en ce que** l'élément d'articulation (14) recouvre, lorsque le couvercle (15) est à l'état fermé, une section de l'ouverture (11) située à proximité de l'arête de base (11a).
